# EUROPÄISCHE PATENTSCHRIFT

(11) **EP 0 715 093 B1**
(45) Veröffentlichungstag und Bekanntmachung des Hinweises auf die Patenterteilung: **06.05.1999**
(21) Anmeldenummer: 95118108.0
(22) Anmeldetag: 17.11.1995
(51) Int. Cl.: F16H 7/08

(54) **Kettenspann-/Riemenspannvorrichtung**
Chain-/belt tensioning device
Dispositif tendeur de chaîne/courroie

(30) Priorität: 03.12.1994 DE 4443095
(43) Veröffentlichungstag der Anmeldung: 05.06.1996
(73) Patentinhaber: Ford-Werke Aktiengesellschaft, 50735 Köln (DE); FORD FRANCE S. A., 92506 Rueil-Malmaison (FR); FORD MOTOR COMPANY LIMITED, Brentwood, Essex CM13 3BW (GB)
(72) Erfinder: Meurer, Josef, Dipl.-Ing., D-53844 Troisdorf (DE); Weber, Gottfried, D-50672 Köln (DE); Metz, Hans-Walter, D-50259 Pulheim (DE); Schwertfirm, Gerd, D-53797 Lohmar (DE)
(74) Vertreter: Bonsmann, Manfred, Dipl.-Ing.

(56) Entgegenhaltungen:
- EP-A- 0 421 082
- BE-A- 512 036
- DE-A- 2 212 818
- DE-A- 2 525 352

## Beschreibung

Die Erfindung betrifft eine Kettenspann-/Riemenspannvorrichtung mit einem in einem Grundkörper vorgesehenen Zylinder mit einem geschlossenen Ende und einem offenen Ende und einem in dem Zylinder hin- und herbewegbar gelagerten Kolben, dessen über das offene Ende des Grundkörpers vorstehendes eines Ende direkt oder indirekt gegen die zu spannende Kette anliegt und dessen anderes Ende über eine mechanisch/hydraulische Vorspanneinrichtung gegen das geschlossene Ende des Zylinders abgestützt ist.

Kettenspann-/Riemenspannvorrichtungen sind bekannt, z.B. aus der US-PS 3,407,674, der Veröffentlichung Krafthand, Heft 2 (1964) Seite 38, der DE-OS 23 33 688, der DE-PS 908 694, der DE-PS 40 01 303, der DE-PS 40 01 304, der DE-PS 22 12 818, der DE-PS 25 25 352 oder der DE-OS 25 57 109. Dabei wird der im Zylinder hin- und herbewegbare Kolben mit Hilfe mechanischer und hydraulischer Mittel so vorgespannt, daß sein über das offene Ende des Grundkörpers vorstehendes freies Ende unter einer vorherbestimmten Spannung an die Kette anliegt. Dadurch soll bewirkt werden, daß die Kette entlang ihres gesamten Weges unter Spannung steht, um eine Verschleißlängung auszugleichen und auftretende Schwingungen zu dämpfen.

In Verbrennungskraftmaschinen vorgesehene Kettenspann-/Riemenspannvorrichtungen sollen neben verschleißbedingten Längenänderungen der Kette Längs- und Querschwingungen der Kette, die durch Anregungen von Nockenwelle, Kurbelwelle und Nebenaggregaten hervorgerufen werden können und die auf dem Polygoneffekt und Spurungenauigkeiten der Kettenräder beruhen können, ausgleichen. Das Dämpfungsverhalten bekannter unter Federvorspannung stehender und hydraulisch abgestützter Kettenspann-/Riemenspannvorrichtungen ist dabei im wesentlichen von dem vom Leckagestrom zwischen Kolben und Zylinderwand abhängig, welcher durch das Spaltmaß und durch die kinematische Viskosität bestimmt wird. Hochfrequente Belastungsstöße und daraus resultierende hochfrequente Kettenschwingungen werden dabei nur ungenügend abgefangen, wodurch der mechanische Wirkungsgrad und die Dauerfestigkeit negativ beeinflußt werden.

Der Erfindung liegt die Aufgabe zugrunde, eine Kettenspann- /Riemenspannvorrichtung zu schaffen, bei der auch hochfrequente Schwingungen weitestgehend gedämpft werden.

Für eine Kettenspann-/Riemenspannvorrichtung der eingangs genannten Art wird dies dadurch erreicht, daß zwischen der mechanisch/hydraulischen Vorspanneinrichtung und dem geschlossenen Ende des Zylinders eine auf Druck vorgespannte Dämpfungseinrichtung angeordnet ist.

Somit weist die Kettenspann-/Riemenspannvorrichtung eine mechanisch/hydraulische Vorspanneinrichtung auf, auf die die von der Kette kommenden "Stöße" zunächst aufgegeben werden. Die Stöße werden von der mechanisch/hydraulischen Vorspanneinrichtung teilweise kompensiert bzw. gedämpft. Nicht kompensierte "Stöße", insbesondere hochfrequente Schwingungen, werden auf den Basiskolben übertragen und dann durch das dem Basiskolben nachgeschaltete Dämpfungselement kompensiert. Die Hydraulikflüssigkeit zwischen dem Kolben und dem Basiskolben wirkt für die hochfrequenten Schwingungen wie ein starrer Körper, so daß diese auf den Basiskolben übertragen werden, während niedrigfrequente Schwingungen oder Stöße von der federnden Abstützeinrichtung des Kolbens auf den Basiskolben aufgenommen werden. Somit handelt es sich letztlich bei der Erfindung um eine Reihenschaltung von zwei Dämpfungseinrichtungen, wobei die der Kette zugewandte erste Dämpfungseinrichtung gegenüber der nachgeschalteten zweiten Dämpfungseinrichtung über eine Parallelschaltung einer mechanischen Vorspanneinrichtung (Feder) und einer hydraulischen Dämpfungseinrichtung abgestützt ist, wobei das Dämpfungsverhalten so gestaltet ist, daß diejenigen Schwingungen, die nicht durch die als Parallelschaltung wirkende mechanisch/hydraulische Vorspanneinrichtung gedämpft bzw. kompensiert werden, also insbesondere hochfrequente Schwingungen, über die für solche Schwingungen wie ein starrer Körper wirkende Hydraulikflüssigkeit auf die erfindungsgemäß vorgesehene Dämpfungseinrichtung gegeben und dann dort gedämpft werden.

In zweckmäßiger Ausgestaltung ist der Hubweg der Dämpfungseinrichtung über eine Hubbegrenzungseinrichtung begrenzt ausgebildet.

Die Dämpfungseinrichtung kann in zweckmäßiger Ausgestaltung der Erfindung ein unter Druckvorspannung einerseits gegen das geschlossene Ende des Zylinders anliegendes und andererseits einem Stirnendbereich eines in dem Zylinder angeordneten Basiskolbens zugewandtes elastisches Dämpfungselement aufweisen, wobei der Kolben über die mechanisch/hydraulische Vorspanneinrichtung gegen den anderen Stirnendbereich des Basiskolbens abgestützt ist.

Die Vorspannung des Dämpfungselementes kann durch Zusammendrücken des elastischen Materials und Festlegen mittels einer Vorspanneinrichtung bewirkt werden. Die Vorspanneinrichtung für das Dämpfungselement weist vorzugsweise einen mit seinem äußeren Umfangsbereich in eine Nut in der Zylinderinnenwand eingelassenen und quer zur Zylinderlängsrichtung verlaufend angeordneten Vorspannanschlagring auf, durch den das elastische Dämpfungselement unter Druckvorspannung gehalten wird.

In weiterer Ausbildung dieses Merkmals der Erfindung kann vorgesehen sein, daß der Vorspannanschlagring im Bereich einer im Außenumfang des Basiskolbens vorgesehenen Ringnut angeordnet ist und in Ruhestellung eine Stirnseite des Vorspannanschlagrings gegen die dem Dämpfungselement zugewandte Stirnseite der Ringnut des Basiskolbens anliegt. Es kann aber auch vorgesehen sein, daß auf der dem geschlossenen Ende des Zylinders abgewandten Stirnseite des Dämpfungselementes eine Vorspannscheibe angeordnet ist, die mit ihrer gegenüberliegenden, dem Dämpfungselement abgewandten Stirnseite gegen den Vorspannanschlagring anliegt.

Die Hubbegrenzungseinrichtung des Basiskolbens kann als eine Flanke einer in Ruhestellung auf Abstand zu dem Vorspannanschlagring und parallel zu diesem angeordneten, eine Relativbewegung des Basiskolbens zu dem Vorspannanschlagring ermöglichenden Aussparung des Basiskolbens ausgebildet sein. Alternativ oder zusätzlich kann vorgesehen sein, daß die Hubbegrenzungseinrichtung einen eine öffnung des Dämpfungselementes durchfassenden, sich in Längsrichtung des Hubweges erstreckenden Anschlagzapfen aufweist, dessen dem geschlossenen Ende des Zylinders zugewandtes Stirnende in Ruhestellung auf Abstand zu dem geschlossenen Ende angeordnet ist. Der unter Kompression des elastischen, unter Druckvorspannung stehenden Dämpfungselementes mögliche Hubweg des Basiskolbens wird dabei durch den Abstand der Flanke der Aussparung des Basiskolbens zu dem Vorspannanschlag und/oder den Abstand des freien Stirnendes des Anschlagzapfens zu dem geschlossenen Ende des Zylinders bestimmt.

Zur Erhöhung der Elastizität des Dämpfungselementes kann dieses entlang seiner Peripherie mit einer Ringnut versehen sein.

Das Dämpfungselement selbst kann beispielsweise als elastischer Formkörper auf der Basis von Elastomeren ausgebildet sein. Es besteht auch die Möglichkeit, das Dämpfungselement als fluidgedämpftes Gummi-Rückstellelement oder z.B. als Federelement mit hydraulischer Drosselung auszubilden.

Bei Einsatz der erfindungsgemäßen Kettenspann-/Riemenspannvorrichtung in einer Verbrennungskraftmaschine wird die hinund hergehende Bewegung des Kolbens hydraulisch abgedämpft, indem der Kolben von dem Druck des Motoröls der Verbrennungskraftmaschine beaufschlagt wird und gezielte Leckagen vorgesehen werden, wodurch sich die an die Kette anzulegende Spannung besonders einfach und effektiv regeln läßt.

Die Erfindung wird nachfolgend anhand der Zeichnungen näher erläutert. Es zeigen:
- Fig. 1: eine schematische Darstellung eines Teils einer Verbrennungskraftmaschine mit einer endlos umlaufend über Zahnräder einer Antriebswelle und einer Nockenwelle geführten Kette;
- Fig. 2 und Fig. 3: Längsschnittdarstellungen von zwei unterschiedlichen Ausführungsbeispielen der erfindungsgemäßen Kettenspann-/Riemenspannvorrichtung.

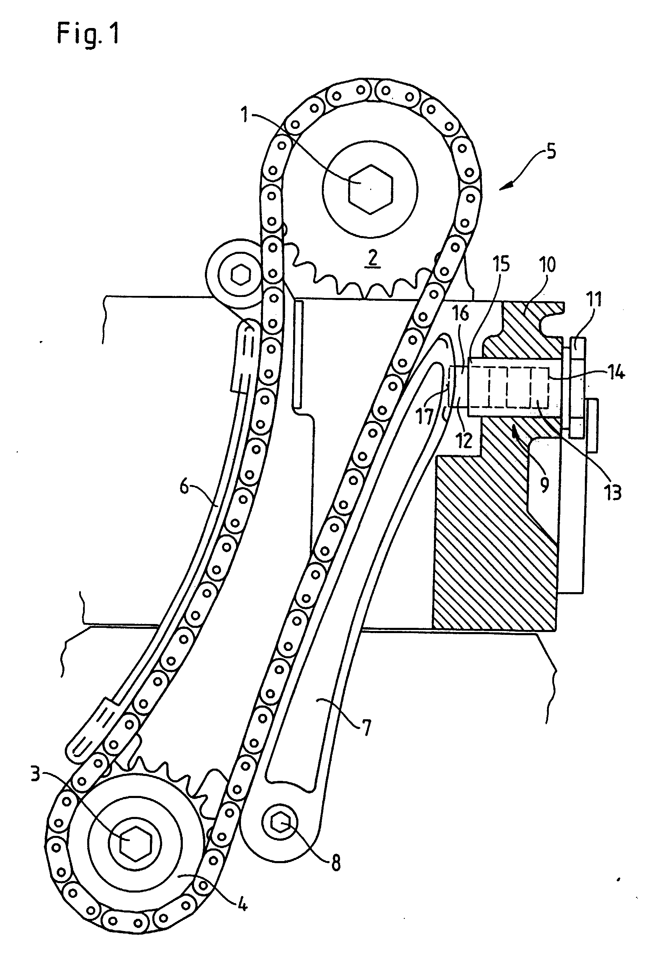

Fig. 1 zeigt einen schematischen Teilausschnitt einer Verbrennungskraftmaschine. An einer Nockenwelle 1 ist ein Zahnrad 2 und an einer Antriebswelle 3 ist ein Kettenrad 4 angebracht. Über die Kettenräder 2 und 4 ist eine Kette 5 endlos umlaufend geführt. Die Kette 5 liegt auf einer Seite gegen eine Kettenführung 6 auf der anderen Seite gegen eine Spannschiene 7 an, die bei 8 verschwenkbar gelagert und unter Wirkung einer insgesamt mit 9 bezeichneten Kettenspannvorrichtung vorgespannt ist. Die Kettenspannvorrichtung 9 weist einen fest an einem Gehäuseteil 10 des Motors angebrachten Grundkörper 11 und einen in einem Zylinder des Grundkörpers hin- und herbewegbar gelagerten Kolben 12 auf. Der in dem Grundkörper 11 vorgesehene Zylinder trägt die Bezugsziffer 13. Das geschlossene Ende des Zylinders 13 ist mit 14 bezeichnet, während das offene Ende des Zylinders die Bezugsziffer 15 trägt. Der über das offene Ende vorstehende Teil 16 des Kolbens 12 liegt mit seinem Stirnende 17 gegen die Spannschiene 7 an.

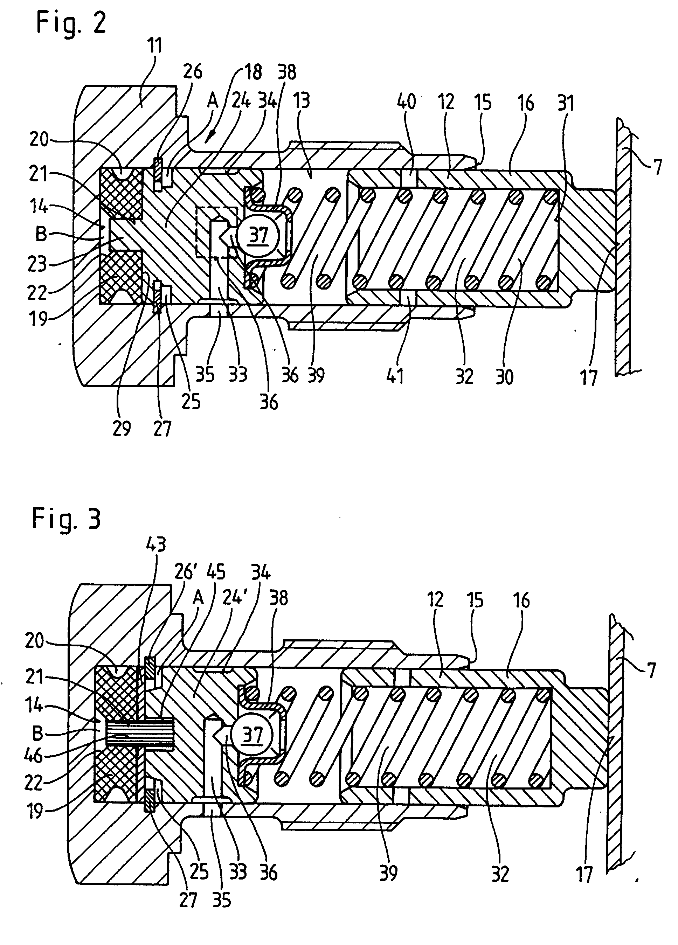

Fig. 2 zeigt einen detaillierten Längsschnitt eines Ausführungsbeispiels. In dem geschlossenen Endbereich des Zylinders 13 liegt eine insgesamt mit 18 bezeichnete Dämpfungseinrichtung gegen das geschlossene Ende 14 des Zylinders 13 an. Die Dämpfungseinrichtung weist ein aus elastischem Werkstoff bestehendes Dämpfungselement 19 auf, welches an seiner Peripherie eine Ringnut 20 sowie eine zentrische Öffnung 21 aufweist, die in einen sich erweiternden Teil 22 mündet. Die zentrische Öffnung wird von einem Anschlagzapfen 23 durchfaßt, der bei dem Ausführungsbeispiel gemäß Fig. 2 einstückig mit einem Basiskolben 24 ausgebildet ist. Der Basiskolben 24 weist an seinem Umfang eine Aussparung 25 auf, deren entsprechend der zeichnerischen Darstellung linkes Ende gegen einen Vorspannanschlagring 26 anliegt, welcher seinerseits in eine Nut 27 in der Zylinderinnenwand eingelassen ist und quer zur Zylinderlängsrichtung verläuft. Das Dämpfungselement 19 liegt an seiner dem geschlossenen Ende des Zylinders abgewandten Stirnseite gegen eine umlaufende Flanke 29 des Basiskolbens 24 an und wird durch Wirkung des Vorspannanschlagringes 26 unter einer bei der Montage aufgebrachten Druckvorspannung gehalten.

Der mögliche Hubweg des Basiskolbens 24 wird durch den Abstand A zwischen dem Vorspannschlagring 26 und der Flanke der Ausnehmung in dem Basiskolben oder wahlweise auch durch den Abstand B zwischen dem freien Stirnende des Anschlagzapfens 23 und dem geschlossenen Ende des Zylinders bestimmt.

Zwischen dem Basiskolben 24 und dem Kolben 12 ist eine mechanisch/hydraulische Vorspanneinrichtung vorgesehen. Die mechanische Vorspanneinrichtung des Kolbens weist eine Feder 30 auf, die mit einem Ende gegen den Boden 31 einer zylindrischen Innenausnehmung 32 des Kolbens 12 und mit ihrem anderen Ende gegen den Basiskolben 24 abgestützt ist.

Zur hydraulischen Versorgung ist in dem Basiskolben 24 ein Ölzuführungskanal 33 vorgesehen, dem über eine Ringnut 34 und einen Ölanschluß 35 hydraulisches Medium zuführbar ist. Der Ölzuführungskanal 33 mündet in eine mit 36 bezeichnete und schematisch dargestellte Ölversorgungskammer, welche über ein Rückschlagventil mit einer in einem Kugelkäfig 38 gehaltenen federvorgespannten Kugel 37 mit dem als Druckraum 39 ausgebildeten Inneren des Zylinders 13 und der Innenausnehmung 32 in Verbindung steht. Bohrungen 40 und 41 in dem Kolben 12 ermöglichen eine gezielte Leckage zwischen dem Zylinder 13 und dem Kolben 12.

Bei Inbetriebnahme der Verbrennungskraftmaschine gelangt Drucköl über den Zuführungskanal 33 in die Ölversorgungskammer 36. Gleichzeitig drückt die Feder 30 den Kolben 12 in Richtung auf die Spannschiene 7, wodurch sich der Druck in der Druckkammer 39 verringert. Das Rückschlagventil ist so eingestellt, daß eine Verbindung zwischen der Ölversorgungskammer 36 und der Druckkammer 39 dann freigegeben wird, wenn die Druckdifferenz zwischen der Ölversorgungskammer und der Druckkammer einen bestimmten Wert erreicht hat. Bei geöffnetem Rückschlagventil gelangt Drucköl in die Druckkammer 39. Dadurch bewegt sich der Kolben 12 in einer der Spannschiene 7 zugewandten Richtung, und die Kette 5 wird gespannt. Infolge der von der Kette auf die Spannschiene 7 und damit auf den Kolben 12 ausgeübten Kraft baut sich in der Druckkammer 39 ein Druck auf. Sobald dieser Druck den Druck des Drucköls übersteigt, schließt das Rückschlagventil. Durch eine vorherbestimmte Leckagemöglichkeit für das Drucköl in dem Ringspalt zwischen dem Kolben 12 und dem Zylinder 13 des Grundkörpers 11, tritt aus dem Druckraum 39 Öl aus, was eine Kolbenbewegung und Dämpfungswirkung zur Folge hat.

Insbesondere hochfrequente Kettenkräfte und Kettenschwingungen, die von der mechanisch/hydraulischen Vorspanneinrichtung nicht kompensiert werden, werden über das Hydraulikmedium im Druckraum 39 und/oder die Feder 30 auf den beweglichen Basiskolben 24 und dann auf das vorgespannte Dämpfungselement 19 geleitet, und von diesem wirkungsvoll absorbiert. Die Dämpfungseigenschaft kann insbesondere durch die Wahl der Materialien des Dämpfungselementes und durch die dem Dämpfungselement aufgegebene Druckvorspannung eingestellt werden.

Bei dem in Fig. 3 dargestellten weiteren Ausführungsbeispiel der Erfindung sind gleiche Teile wie in Fig. 2 mit gleichen Bezugszahlen versehen und werden nicht nochmals gesondert erläutert. Nachfolgend werden lediglich diejenigen Teile beschrieben, die unterschiedlich zu der Ausführungsform gemäß Fig. 2 ausgebildet sind. Gemäß Fig. 3 liegt der hier mit 24' bezeichnete Vorspannanschlagring gegen eine Vorspannscheibe 43 an, die ihrerseits gegen das dem geschlossenen Ende 14 abgewandte Stirnende des Dämpfungselementes 19 anliegt. Im Unterschied zu Fig. 2 weist der hier mit 44 bezeichnete Basiskolben eine Innenausnehmung 45 auf, in die ein an der Vorspannscheibe angebrachter und diese durchfassender Anschlagzapfen 46 hineinragt, der im übrigen das Dämpfungselement 19 durchfaßt.

Bei beiden dargestellten Ausführungsformen der erfindungsgemäßen Kettenspannvorrichtung liegt der Basiskolben 24 bzw. 24' direkt oder indirekt gegen das Dämpfungselement 19 an, wodurch bewirkt wird, daß hochfrequente Schwingungen, die bei einem Auftreffen des entsprechenden Stirnendes des Basiskolbens gegen das geschlossene Ende 14 des Zylinders in dem Grundkörper 11 auftreten würden, stark gedämpft werden, so daß an dem Übergang vom Basiskolben 24 bzw. 24' zu dem geschlossenen Ende 14 des Zylinders in dem Grundkörper 11 praktisch keine hochfrequenten Schwingungen auftreten, wodurch die Lebensdauer der Kettenspannvorrichtung insgesamt erhöht und der mechanische Wirkungsgrad des Kettentriebes verbessert wird.

## Patentansprüche

1. Kettenspann-/Riemenspannvorrichtung mit einem in einem Grundkörper (11) vorgesehenen Zylinder (13) mit einem geschlossenen Ende (14) und einem offenen Ende (15) und einem in dem Zylinder hin- und herbewegbar gelagerten Kolben (12), dessen über das offene Ende des Grundkörpers vorstehendes eines Ende (17) direkt oder indirekt gegen die zu spannende Kette anliegt und dessen anderes Ende über eine mechanisch/hydraulische Vorspanneinrichtung (9) gegen das geschlossene Ende des Zylinders (13) abgestützt ist, dadurch gekennzeichnet, daß zwischen der mechanisch/hydraulischen Vorspanneinrichtung (9) und dem geschlossenen Ende (14) des Zylinders (13) eine auf Druck vorgespannte Dämpfungseinrichtung (18) angeordnet ist.

2. Kettenspann-/Riemenspannvorrichtung nach Anspruch 1, dadurch gekennzeichnet, daß der Hubweg (A, B) der Dämpfungseinrichtung (18) über eine Hubbegrenzungseinrichtung begrenzt ist.

3. Kettenspann-/Riemenspannvorrichtung nach Anspruch 1 oder 2, dadurch gekennzeichnet, daß die Dämpfungseinrichtung (18) ein unter Druckvorspannung einerseits gegen das geschlossene Ende (14) des Zylinders (13) anliegendes und andererseits einem Stirnendbereich eines in dem Zylinder angeordneten Basiskolbens (24, 24') zugewandtes elastisches Dämpfungselement (19) aufweist, und der Kolben (12) über die mechanisch/hydraulische Vorspanneinrichtung gegen den anderen Stirnendbereich des Basiskolbens abgestützt ist.

4. Kettenspann-/Riemenspannvorrichtung nach Anspruch 3, dadurch gekennzeichnet, daß eine Vorspanneinrichtung für das Dämpfungselement (19) einen mit seinem äußeren Umfangsbereich in eine Nut (26) in der Zylinderinnenwand eingelassenen und quer zur Zylinderlängsrichtung verlaufend angeordneten Vorspannanschlagring (26, 26') aufweist.

5. Kettenspann-/Riemenspannvorrichtung nach Anspruch 4, dadurch gekennzeichnet, daß der Vorspannanschlagring (26) im Bereich einer im Außenumfang des Basiskolbens (24) vorgesehenen Ringnut (25) angeordnet ist und in Ruhestellung eine Stirnseite des Vorspannanschlagringes (26) gegen die dem Dämpfungselement (19) zugewandte Stirnseite der Ringnut des Basiskolbens (24) anliegt.

6. Kettenspann-/Riemenspannvorrichtung nach Anspruch 4, dadurch gekennzeichnet, daß auf der dem geschlossenen Ende (14) des Zylinders abgewandten Stirnseite des Dämpfungselementes (19) eine Vorspannscheibe (43) angeordnet ist, die mit ihrer gegenüberliegenden, dem Dämpfungselement (19) abgewandten Stirnseite gegen den Vorspannanschlagring (26') anliegt.

7. Kettenspann-/Riemenspannvorrichtung nach einem der Ansprüche 2 bis 6, dadurch gekennzeichnet, daß die Hubbegrenzungseinrichtung eine Flanke einer in Ruhestellung auf Abstand (A) zu dem Vorspannanschlagring (26, 26') und parallel zu diesem angeordneten, eine Relativbewegung des Basiskolbens (24, 24') zu dem Vorspannanschlagring (26, 46) ermöglichende Aussparung des Basiskolbens (24, 24') aufweist.

8. Kettenspann-/Riemenspannvorrichtung nach einem der Ansprüche 2 bis 6, dadurch gekennzeichnet, daß wahlweise die Hubbegrenzungseinrichtung einen eine Öffnung des Dämpfungselementes (19) durchfassenden, sich in Längsrichtung des Hubweges erstreckenden Anschlagzapfen (23, 46) aufweist, dessen dem geschlossenen Ende (14) des Zylinders zugewandtes Stirnende in Ruhestellung auf Abstand (B) zu dem geschlossenen Ende (14) angeordnet ist.

9. Kettenspann-/Riemenspannvorrichtung nach Anspruch 8, dadurch gekennzeichnet, daß der Zapfen (23) einstückig mit dem Basiskolben (24) ausgebildet ist.

10. Kettenspann-/Riemenspannvorrichtung nach Anspruch 8, dadurch gekennzeichnet, daß der Anschlagzapfen (46) an der Vorspannscheibe (43) angebracht ist.

11. Kettenspann-/Riemenspannvorrichtung nach einem der Ansprüche 1 bis 10, dadurch gekennzeichnet, daß das Dämpfungselement (19) entlang seiner Peripherie mit einer Ringnut (20) versehen ist.

12. Kettenspann-/Riemenspannvorrichtung nach einem der Ansprüche 1 bis 11, dadurch gekennzeichnet, daß das Dämpfungselement (19) als elastischer Formkörper auf der Basis von Elastomeren ausgebildet ist.

13. Kettenspann-/Riemenspannvorrichtung nach einem der Ansprüche 1 bis 11, dadurch gekennzeichnet, daß das Dämpfungselement als fluidgedämpftes Gummi-Rückstellelement ausgebildet ist.

14. Kettenspann-/Riemenspannvorrichtung nach einem der Ansprüche 1 bis 11, dadurch gekennzeichnet, daß das Dämpfungselement als Federelement mit hydraulischer Drosselung ausgebildet ist.

## Claims

1. A chain/belt tensioning device comprising a cylinder (13) having a closed end (14) and an open end (15) provided in a base member (11) and a piston (12), mounted to reciprocate in the cylinder, of which the end (17) projecting from the open end of the base member bears directly or indirectly against the chain to be tensioned and the other end is supported through a mechanical/hydraulic preloading device (9) against the closed end of the cylinder (13), characterised in that a damping device (18) preloaded under compression is fitted between the mechanical/hydraulic preloading device (9) and the closed end (14) of the cylinder (13).

2. A chain/belt tensioning device according to claim 1, characterised in that the stroke (A, B) of the damping device (18) is limited by a stroke-limiting device.

3. A chain/belt tensioning device according to claim 1 or claim 2, characterised in that the damping device (18) includes a compressively preloaded elastic damping element (19) one side of which bears against the closed end (14) of the cylinder (13) and the other side faces an end face region of a base piston (24, 24') fitted in the cylinder, and that the piston (12) is supported through the mechanical/hydraulic preloading device against the other end face region of the base piston.

4. A chain/belt tensioning device according to claim 3, characterised in that the preloading device for the damping element (19) includes a preloading impact ring (26, 26') having its outer circumference inset in a groove (26) in the inner wall of the cylinder and running transverse to the longitudinal direction of the cylinder.

5. A chain/belt tensioning device according to claim 4, characterised in that the preloading impact ring (26) is fitted in the fitted in the vicinity of an annular groove (25) provided in the outer circumference of the base piston (24) and that in the rest position a face of the preloading ring (26) bears on the face of the annular groove in the base piston (24) which faces towards the damping element (19).

6. A chain/belt tensioning device according to claim 4, characterised in that on the face of the damping element (19) which faces away from the closed end (14) of the cylinder a preloading washer (43) is provided which bears with its opposite face, which faces away from the damping element (19), on the preloading impact ring (26').

7. A chain/belt tensioning device according to one of claims 2 to 6, characterised in that the stroke limiting device includes a flank of a recess in the base piston (24, 24') which in the rest position is located at a distance (A) from the preloading impact ring (26, 26') and parallel thereto, allowing movement of the base piston (24, 24') relative to the preloading impact ring (26, 46).

8. A chain/belt tensioning device according to one of claims 2 to 6, characterised in that optionally the stroke limiting device includes a stop pin (23, 46) passing through an opening in the damping element (19) and extending in the longitudinal direction of the stroke, of which the end face facing towards the closed end (14) of the cylinder is located in the rest state at a distance (B) from said closed end (14).

9. A chain/belt tensioning device according to claim 8, characterised in that the pin (23) is integral with the base piston (24).

10. A chain/belt tensioning device according to claim 8, characterised in that the stop pin (46) is attached to the preloading disc (43).

11. A chain/belt tensioning device according to one of claims 1 to 10, characterised in that the damping element (19) is provided with an annular groove (20) along its periphery.

12. A chain/belt tensioning device according to one of claims 1 to 11, characterised in that the damping element (19) is in the form of an elastomer-base elastic shaped body.

13. A chain/belt tensioning device according to one of claims 1 to 11, characterised in that the damping element (19) is in the form of a fluid-damped rubber restoring element.

14. A chain/belt tensioning device according to one of claims 1 to 11, characterised in that the damping element (19) is in the form of a spring element with hydraulic throttling.

## Revendications

1. Dispositif tendeur de chaîne ou de courroie, comprenant un cylindre (13) prévu dans un corps de base (11) et doté d'une extrémité fermée (14) et d'une extrémité ouverte (15), et un piston (12), monté mobile en va-et-vient dans le cylindre et dont une extrémité (17), dépassant de l'extrémité ouverte du corps de base, s'applique directement ou indirectement contre la chaîne à tendre, et dont l'autre extrémité s'appuie contre l'extrémité fermée du cylindre (13) par l'intermédiaire d'un dispositif de précontrainte hydromécanique, **caractérisé** en ce qu'un dispositif d'amortissement (18), précontraint en pression, est disposé entre le dispositif de précontrainte hydromécanique et l'extrémité fermée (14) du cylindre (13).

2. Dispositif tendeur de chaîne ou de courroie selon la revendication 1, **caractérisé** en ce que la course (A, B) du dispositif d'amortissement (18) est limitée au moyen d'un dispositif limiteur de course.

3. Dispositif tendeur de chaîne ou de courroie selon la revendication 1 ou 2, **caractérisé** en ce que le dispositif d'amortissement (18) présente un élément d'amortissement (19) élastique qui, sous précontrainte de pression, s'applique d'un côté contre l'extrémité fermée (14) du cylindre (13) et, de l'autre côté, est tourné vers une région terminale frontale d'un piston de base (24, 24') disposé dans le cylindre, et le piston (12) s'appuie contre l'autre région terminale frontale du piston de base par l'intermédiaire du dispositif de précontrainte hydromécanique.

4. Dispositif tendeur de chaîne ou de courroie selon la revendication 3, **caractérisé** en ce qu'un dispositif de précontrainte pour l'élément d'amortissement (19) présente une bague de butée de précontrainte (26, 26'), insérée par sa région périphérique extérieure dans une rainure (27) dans la paroi intérieure du cylindre et disposée en s'étendant transversalement à la direction longitudinale du cylindre.

5. Dispositif tendeur de chaîne ou de courroie selon la revendication 4, **caractérisé** en ce que la bague de butée de précontrainte (26) est disposée dans la région d'une rainure annulaire (25) prévue dans la périphérie extérieure du piston de base (24) et, en position de repos, un côté frontal de la bague de butée de précontrainte (26) s'applique contre le côté frontal de la rainure annulaire du piston de base (24) qui est tourné vers l'élément d'amortissement (19).

6. Dispositif tendeur de chaîne ou de courroie selon la revendication 4, **caractérisé** en ce qu'une rondelle de précontrainte (43) est disposée sur le côté frontal de l'élément d'amortissement (19) qui est opposé à l'extrémité fermée (14) du cylindre, rondelle qui, par son autre côté frontal, opposé à l'élément d'amortissement (19), s'applique contre la bague de butée de précontrainte (26').

7. Dispositif tendeur de chaîne ou de courroie selon une des revendications 2 à 6, **caractérisé** en ce que le dispositif limiteur de course comprend un flanc d'un évidement du piston de base (24, 24'), évidement qui est disposé, en position de repos, à distance (A) de la bague de butée de précontrainte (26, 26') et parallèlement à cette dernière, et permet un mouvement relatif du piston de base (24, 24') par rapport à la bague de butée de précontrainte (26, 26').

8. Dispositif tendeur de chaîne ou de courroie selon une des revendications 2 à 6, **caractérisé** en ce que, optionnellement, le dispositif limiteur de course comprend un tenon de butée (23, 46) traversant une ouverture de l'élément d'amortissement (19) et s'étendant dans la direction longitudinale de la course, tenon dont l'extrémité frontale tournée vers l'extrémité fermée (14) du cylindre est disposée, en position de repos, à distance (B) de l'extrémité fermée (14).

9. Dispositif tendeur de chaîne ou de courroie selon la revendication 8, **caractérisé** en ce que le tenon (23) est solidaire du piston de base (24).

10. Dispositif tendeur de chaîne ou de courroie selon la revendication 8, **caractérisé** en ce que le tenon de butée (46) est monté sur la rondelle de précontrainte (43).

11. Dispositif tendeur de chaîne ou de courroie selon une des revendications 1 à 10, **caractérisé** en ce que l'élément d'amortissement (19) est doté d'une rainure annulaire (20) le long de sa périphérie.

12. Dispositif tendeur de chaîne ou de courroie selon une des revendications 1 à 11, **caractérisé** en ce que l'élément d'amortissement (19) est réalisé sous forme de corps moulé élastique à base d'élastomères.

13. Dispositif tendeur de chaîne ou de courroie selon une des revendications 1 à 11, **caractérisé** en ce que l'élément d'amortissement est réalisé sous forme d'élément de rappel en caoutchouc, amorti par fluide.

14. Dispositif tendeur de chaîne ou de courroie selon une des revendications 1 à 11, **caractérisé** en ce que l'élément d'amortissement est réalisé sous forme d'élément de ressort à étranglement hydraulique.
